# EUROPÄISCHE PATENTSCHRIFT

(11) **EP 2 576 068 B1**
(45) Veröffentlichungstag und Bekanntmachung des Hinweises auf die Patenterteilung: **15.04.2015**
(21) Anmeldenummer: 11811002.2
(22) Anmeldetag: 31.05.2011
(51) Int. Cl.: F16K 99/00, F04B 43/04, F17D 1/08, B01L 3/00, F04B 43/02, F17D 1/00

(54) **VORRICHTUNG FÜR DEN TRANSPORT KLEINER VOLUMINA EINES FLUIDS, INSBESONDERE MIKROPUMPE ODER MIKROVENTIL**
DEVICE FOR TRANSPORTING SMALL VOLUMES OF A FLUID, IN PARTICULAR A MICROPUMP OR MICROVALVE
DISPOSITIF POUR LE TRANSPORT DE PETITS VOLUMES D'UN FLUIDE, NOTAMMENT MICROPOMPE OU MICROVALVE

(30) Priorität: 26.03.2011 DE 102011015184; 02.06.2010 DE 102010022550
(43) Veröffentlichungstag der Anmeldung: 10.04.2013
(73) Patentinhaber: thinXXS Microtechnology AG, 66482 Zweibrücken (DE)
(72) Erfinder: WEBER, Lutz, 66482 Zweibrücken (DE); NEUMEIER, Michel, 66399 Mandelbachtal (DE)
(74) Vertreter: Bernhardt, Reinhold
(86) Internationale Anmeldenummer: PCT/DE2011/050017
(87) Internationale Veröffentlichungsnummer: WO 2012/019599

(56) Entgegenhaltungen:
- WO-A1-2006/020569
- US-A1- 2006 131 529
- US-A1- 2007 014 676
- US-B1- 6 179 586

## Beschreibung

Die Erfindung betrifft eine Vorrichtung für den Transport kleiner Volumina eines Fluids, insbesondere eine Mikropumpe oder ein Mikroventil.

Die Erfindung bezieht sich also auf das Gebiet der Mikrofluidik, die in der Medizin und anderen Biowissenschaften zunehmend an Bedeutung gewinnt. Miniaturisierte, auf einem Chip untergebrachte Einrichtungen zur Analyse und/oder Stoffsynthese kommen in Diagnostik wie auch Therapie vermehrt zum Einsatz. Insbesondere Mikropumpen spielen bei der Medikamentdosierung mehr und mehr eine Rolle.

Die eingangs erwähnte Transportvorrichtung kommt als eigenständiges Gerät oder als Komponente einer weitere Komponenten umfassenden mikrofluidischen Analyse- oder/und Syntheseeinrichtung, insbesondere einer sog. Flusszelle, in Betracht.

Bei der Herstellung von mikrofluidischen Flusszellen werden sowohl Verfahren als auch Materialien der Halbleitertechnologie eingesetzt, also Materialien wie Glas, Quarz oder Silizium. In dem Bestreben, den Kostenaufwand für Mikrofluidikprodukte zu senken, kommen als preiswertere Materialien in wachsendem Maße auch Kunststoffe zum Einsatz. Im Hinblick auf eine kostengünstige, aber dennoch hohen Präzisionsanforderungen genügende Massenproduktion erwächst hieraus eine Vielzahl spezifischer Probleme, die in vielen Fällen einer weiteren Kostensenkung und der Herstellung von Kunststoff-Mikrofluidikchips als Einwegprodukte entgegenstehen.

Aus der US 7,832,429 B2 ist eine Transportvorrichtung in Form einer Mikropumpe bekannt, die ein steifes Kunststoffsubstrat und eine gegen das Substrat anliegende Folie aus dem gleichen Kunststoffmaterial aufweist. Die Folie, die teilweise mit dem Substrat verbunden ist und teilweise gegen das Substrat anliegt, kann durch Unterdruck unter Bildung einer Kavität oder mehreren Kavitäten, welche untereinander mittels permanenter Verbindungskanäle verbunden sind, von dem Substrat abgehoben werden. Durch sequentielle Bildung der Kavitäten lässt sich eine Pumpwirkung erzielen.

Solche Transportvorrichtungen werden bevorzugt in mikrofluidischen Einweg- bzw. Wegwerf-Flusszellen zur Analyse und Synthese und zum Transport von geringen Fluidmengen im Bereich von 0,001 bis 10ml in der medizinischen Diagnostik, der Medikamentendosierung, der Zellkultivierung, in Bioreaktoren und der Wirkstoffentwicklung und Mikroreaktionstechnik verwendet.

Der vorliegenden Erfindung liegt die Aufgabe zugrunde, eine neue Transportvorrichtung der eingangs erwähnten Art zu schaffen, die bei weiter verbesserten Geräteeigenschaften eine preiswerte Massenproduktion und darüber hinaus einfache, bevorzugt mechanische und leckagefreie Schnittstellen zu einem Betreibergerät ermöglicht.

Die diese Aufgabe lösende Vorrichtung nach der Erfindung ist gekennzeichnet durch Folien, die mit einander gegenüberliegenden Folienflachen aneinander anliegen und unter Begrenzung eines zwischen den Folien zu bildenden Transportkanals miteinander verbunden sind, sowie durch Auslenkeinrichtungen zur Bildung des Transportkanals unter gemeinsamer Auslenkung der aneinander anliegenden Folien in einer Richtung senkrecht zu den Folienflächen, wobei ein auslenkbarer Flächenbereich der in Auslenkrichtung hinteren Folie innerhalb des auslenkbaren, durch die Verbindung zwischen den Folien begrenzten Flächenbereich der in Auslenkrichtung vorderen Folie liegt.

Erfindungsgemäß wird der Transportkanal zwischen den miteinander verbundenen Folien erst durch Aktuierung, d.h. Auslenkung, der beiden Folien gebildet. Vorteilhaft bedarf diese Art der Kanalbildung keines weichelastischen Folienmaterials, das z.B. Weichmacher und andere Stoffe, wie Öle enthält und mit einer Vielzahl in dem Transportkanal zu transportierender Substanzen nicht kompatibel wäre. Als Material für beide Folien kommt z.B. PMMA, PS, COP, COC, PP, PC, PE oder PEEK in Betracht. Bei Aufhebung der Aktuierung bildet sich der Transportkanal ggf. von selbst zurück. Die Rückbildung kann aber auch aktiv durch eine zweite, der Bildung des Transportkanals entgegenwirkende Aktuierung erfolgen.

Während es denkbar wäre, die Folien zu ihrer Verbindung in einer Klemmbacken und Saugeinrichtungen umfassenden Betreibervorrichtung einzuschließen, sind vorzugsweise die Folien unter gegenseitiger Anhaftung der aneinander anliegenden Folienflächen miteinander unlösbar, insbesondere durch Verschweißung, verbunden. Die Dichtigkeit des Transportkanals lässt sich dadurch selbst bei hohem Druck des zu transportierenden Fluids sicherstellen.

Während auch die unlösbar miteinander verbundenen Folien in einer Betreibervorrichtung eingeklemmt werden könnten, wobei einer der Klemmbacken eine Saugfunktion aufweisen müsste, ist in einer bevorzugten Ausführungsform der Erfindung wenigstens die in Auslenkrichtung hintere Folie unlösbar mit einem starren Substrat verbunden. Dieses starre Substrat kann, wie bei mikrofludischen Flusszellen üblich, bevorzugt Kanäle, Reservoire, Filter oder Misch- und Reaktionskammern oder Detektionskammern sowie fludische Ein- und ggf. Ausgänge zur Probeneingabe und/oder-entnahme aufweisen, welche einzeln oder gemeinsam durch die erfindungsgemäße Transportvorrichtung miteinander seriell und/oder parallel verbunden werden.

Die in Auslenkrichtung vordere Folie könnte weiterhin durch eine Klemmeinrichtung gehalten werden. Vorzugsweise ist aber auch die in Auslenkrichtung vordere Folie, ggf. über die hintere Folie unlösbar mit dem Substrat verbunden.

In besonders bevorzugter Ausgestaltung der Erfindung ist der auslenkbare Flächenbereich der in Auslenkrichtung hinteren Folie durch den Verbindungsbereich dieser Folie mit dem Substrat, insbesondere eine die Folie mit dem Substrat verbindende Schweißnaht, begrenzt. Der auslenkbare Flächenbereich der hinteren Folie liegt innerhalb der vorzugsweise geschlossen umlaufenden Schweißnaht lose aber plan an dem Substrat an.

Während es denkbar wäre, auch bei Verbindung der vorderen Folie mit der hinteren Folie eine die Begrenzung des Auslenkflächenbereichs bildende Klemmvorrichtung zu verwenden, ist in der besonders bevorzugten Ausführungsform der Erfindung der auslenkbare Flächenbereich der in Auslenkrichtung vorderen Folie durch einen Verbindungsbereich mit der hinteren Folie, insbesondere eine die vordere Folie mit der hinteren Folie verbindende Schweißnaht, begrenzt. Die vorzugsweise geschlossen umlaufende Schweißnaht der hinteren Folie schließt also die Schweißnaht der vorderen Folie ein.

In weiterer vorteilhafter Ausgestaltung der Erfindung handelt es sich bei letzterer, die beiden Folien verbindender Schweißnaht um eine ferner die hintere Folie mit dem Substrat verbindende, vorzugsweise durch Laserschweißen erzeugte Doppelschweißnaht.

Vorzugsweise bestehen zumindest die beiden Folien aus dem gleichen Kunststoffmaterial, wobei dieses Material ferner auch mit dem Material des Substrats übereinstimmen kann. Vorteilhaft kommt ein zu transportierendes Fluid auf diese Weise nur mit ein und demselben Material in Berührung.

Zweckmäßig ist die Auslenkeinrichtung zur Ausübung von pneumatischem, hydraulischem oder/und mechanischem Druck auf den auslenkbaren Flächenbereich der in Auslenkungsrichtung hinteren Folie vorgesehen.

Entsprechend kann in dem Flächenbereich des Substrats, der dem auslenkbaren Flächenbereich der hinteren Folie gegenüberliegt, ein Druckkanal für ein Druckgas oder eine Druckflüssigkeit ausmünden. Alternativ mündet dort eine Durchgangsöffnung für den Durchtritt eines Aktors aus.

In einer weiteren bevorzugten Ausführungsform der Erfindung mündet in den Flächenbereich des Substrats, der dem Differenzbereich der auslenkbaren Flächenbereiche der vorderen und hinteren Folie gegenüberliegt, wenigstens ein Kanal aus.

In der Regel wird der den Transportkanal begrenzende Haftverbindungsbereich zwischen den Folien rundum geschlossen sein. Alternativ kann er eine Öffnung aufweisen, z.B. für den Eintritt einer Flüssigkeit, die dann durch Kapillarkraft in den Transportkanal eintritt.

In letzterem Fall ist der Transportkanal innenseitig zweckmäßig hydrophil konditioniert.

In weiterer vorteilhafter Ausgestaltung der Erfindung können Einrichtungen zur Bestimmung des Auslenkungsgrades der vorderen Folie bzw. Innenvolumens des Transportkanals vorgesehen sein. Das Innenvolumen kann z.B. schwanken, wenn der Druck eines zu transportierenden Fluids schwankt. Durch Erfassung der jeweiligen Größe des gebildeten Innenvolumens lässt sich durch entsprechende Steuerung der Pumpaktorbewegung die Durchflussmenge konstant halten. Ggf. auftretende Schwankungen des Innenvolumens des Transportkanals aufgrund von Druckschwankungen des zu transportierenden Fluids können vorteilhaft dadurch minimiert werden, dass durch Anbringen einer weiteren Folie ein druckkontrollierter Außenraum für den Transportbereich geschaffen wird, welcher separat und kontrolliert mit Druck beaufschlagt werden kann.

Eine auf den Transportkanal einwirkende Aktoreinrichtung ist vorzugsweise zur Erzeugung einer in Transportrichtung fortschreitenden Schließfront vorgesehen. In einer peristaltischen Pumpbewegung schiebt die Schließfront in den Transportkanal eingetretenes Fluid vor sich her und transportiert es in gewünschter Weise mit der Geschwindigkeit der voranschreitenden Schließfront aus dem Transportkanal heraus. Die Aktoreinrichtung verschließt den Transportkanal ggf. gegen die zur Auslenkung der Folien anliegende Kraft. Das Verschließen des Transportkanals erfolgt durch Anlegen der Folien plan aneinander.

Der Transportkanal kann eingangsseitig mehrere Entrittskanäle für verschiedene zu mischende Fluide aufweisen, welche mit mehreren Kanälen oder Reservoiren für die verschiedenen Fluide verbunden sind. Die Aktorbewegung führt dann neben dem Transport der Fluide gleichzeitig zu einer Durchmischung derselben.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1: eine erfindungsgemäße Mikropumpe in perspektivischer Darstellung,
- Fig. 2: die Mikropumpe von Fig. 1 in einer Explosionsdarstellung,
- Fig. 3: eine Längsschnitt- und eine Querschnittsdarstellung der Mikropumpe von Fig. 1,
- Fig. 4: verschiedene Möglichkeiten zur Bildung eines erfindungsgemäßen Transportkanals,
- Fig. 5: verschiedene Möglichkeiten zur erfindungsgemäßen Auslenkung von Folien,
- Fig. 6: ein weiteres Ausführungsbeispiel für eine erfindungsgemäße Pumpenbaugruppe.
- Fig. 7: ein Ausführungsbeispiel für eine Ventilbaugruppe nach der Erfindung,
- Fig. 8: eine Mehrkammerpumpe nach der Erfindung,
- Fig. 9: verschiedene Möglichkeiten zur Bestimmung des Innenvolumens eines erfindungsgemäß gebildeten Transportkanals,
- Fig. 10: eine auf Kapillarwirkung beruhende Pumpenbaugruppe nach der Erfindung, und
- Fig. 11: eine auf Kapillarwirkung beruhende Ventilbaugruppe nach der Erfindung.

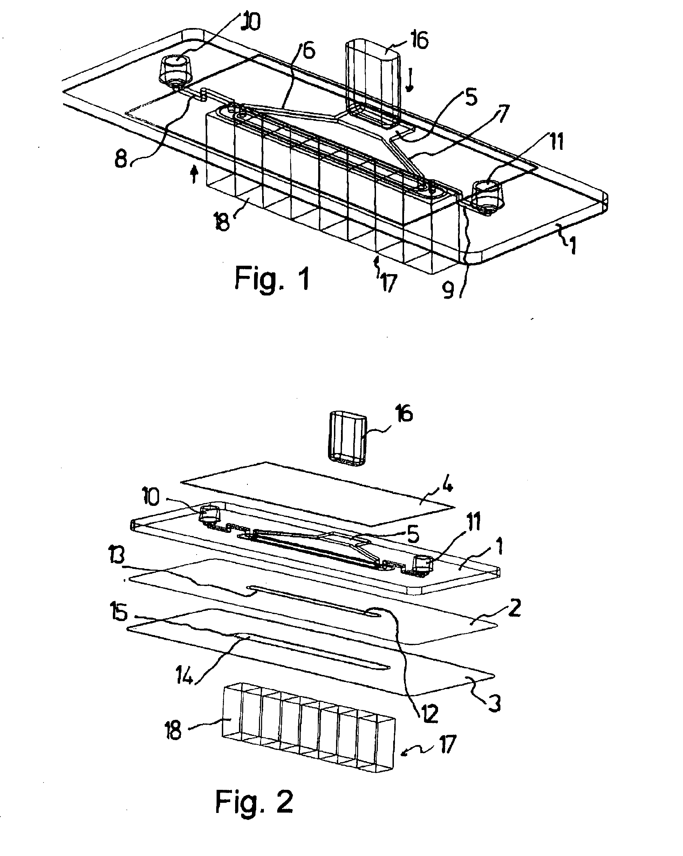

Eine in den Figuren 1 bis 4 dargestellte Mikropumpenbaugruppe umfasst ein Substrat 1 in der Form einer flachen Platte, eine mit dem Substrat 1 auf dessen einer Plattenseite verbundene Folie 2 und eine weitere mit dem Substrat 1 über die Folie 2 verbundene Folie 3. Auf seiner den Folien 2 und 3 abgewandten Seite ist das Substrat 1 mit einer dritten Folie 4 verbunden.

Sämtliche der genannten Teile bestehen in dem gezeigten Ausführungsbeispiel aus dem gleichen Kunststoffmaterial. In Betracht kommen hierfür z.B. PMMA, PC, PS, PP, PE, COC, COP, PET oder PEEK.

Die Dicke des Substrats 1 kann z.B. zwischen 0,5 und 5 mm, insbesondere 0,5 und 2 mm, liegen. Die Dicke der Folie 2 liegt vorzugsweise im Bereich von 0,001 bis 0,5 mm, insbesondere 0,01 mm bis 0,1 mm, und die Dicke der Folie 3 beträgt z.B. 0,01 bis 1 mm, bevorzugt 0,05 bis 0,3 mm.

Während sich die Folien 2 und 3 in dem gezeigten Beispiel über die gesamte Plattenfläche des Substrats 1 erstrecken, deckt die Folie 4 nur einen Teilbereich der betreffenden Plattenfläche ab und verschließt insbesondere eine in dem Substrat 1 gebildete Ausnehmung 5 sowie teilweise hin zu der Ausnehmung 5 und zu Anschlüssen 10 und 11 führende Kanäle 6 und 7 bzw. 8 und 9.

Wie insbesondere Fig. 2 erkennen lässt, weist die Folie 2 einen länglichen Flächenbereich 12 auf, den eine die Folie 2 mit dem Substrat 1 verbindende, vorzugsweise durch einen Laser erzeugte Schweißnaht 13 begrenzt. Vorzugsweise wird für die Laserschweißung die Folie 2 zumindest im Bereich der Schweißnaht 13 für die gewählte Laserwellenlänge transparent und der unter der Schweißnaht 13 liegende Bereich des Substrats 1 absorbierend ausgebildet, z.B. durch Hinzufügen absorbierender Zusatzstoffe, wie Kohlenstoff oder Ruß zum Kunststoffmaterial. Innerhalb des Flächenbereichs 12 und außerhalb der Schweißnaht liegt die Folie 2 lose gegen das Substrat 1 an.

Die Folie 3 weist einen dem Flächenbereich 12 ähnlichen, aber größeren Flächenbereich 14 auf, welcher den Flächenbereich 12 einschließt und durch eine, wie die Schweißnaht 13 vorzugsweise durch Laserschweißen gebildete, Schweißnaht 15 begrenzt ist. Die Schweißnaht 15 verbindet als Doppelnaht sowohl die Folie 3 mit der Folie 2 als auch die Folie 2 mit dem Substrat 1.

Die Bezugszahl 16 verweist auf einen mechanischen Aktor, der Bestandteil eines Betriebsgerätes für die das Substrat 1 und die Folien 2 bis 4 umfassende Mikropumpenbaugruppe ist und die Folie 4 in die Ausnehmung 5 im Substrat 1 hinein auslenken kann.

Auf der dem Aktor 16 abgewandten Seite der Mikropumpenbaugruppe befindet sich eine Aktoreinrichtung 17, die sich über die Länge des gesamten Flächenbereiches 14 erstreckt und einzeln senkrecht zur Plattenebene des Substrats 1 bewegbare Aktoren 18 umfasst.

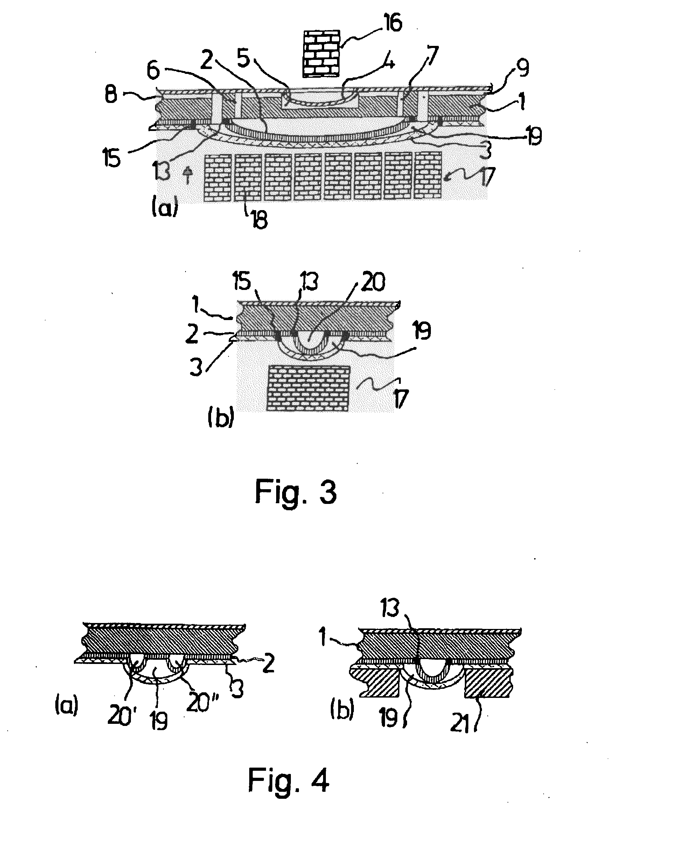

Die Betriebsweise der vorangehend beschriebenen Mikropumpenbaugruppe wird nachfolgend anhand von Fig. 3 beschrieben, deren Fig. 3a einen Längsschnitt entlang der Mitte der Flächenbereiche 12.14 und deren Fig. 3b einen Querschnitt durch diese Flächenbereiche zeigt.

Eine Dehnung der Folie 4 durch den Aktor 16 in die Ausnehmung 5 hinein führt zur Verdrängung eines darin enthaltenen Fluids, z.B. Luft, in die Kanäle 6 und 7 hinein, welche in dem Substrat 1 gegenüber dem Flächenbereich 12 der gegen das Substrat 1 anliegenden Folie 2 ausmünden. Das durch die Ausmündungen tretende ggf. komprimierte Fluid dehnt die bis dahin plan gegen das Substrat 1 anliegende Folie 2 in der in Fig. 3 gezeigten Weise unter Bildung eines Auslenkkanals 20 aus. Mit dieser Ausdehnung kommt es zwangsläufig auch zur Ausdehnung der bis dahin plan gegen die Folie 2 anliegenden Folie 3. Aufgrund der größeren Ausdehnung des Flächenbereichs 14 der Folie 3 gegenüber dem Flächenbereich 12 der Folie 2 entsteht bei dieser Ausdehnung zwischen den Folien 2,3 ein Transportkanal 19, in den die Kanäle 8 und 9 an dessen Enden ausmünden.

Bildet z.B. der Anschluss 10 einen Einlass für ein durch die Pumpenbaugruppe zu transportierendes Fluid, so wird das anstehende Fluid infolge der Entstehung des Transportkanals 19 über den Kanal 8 in den Transportkanal 19 hinein eingesaugt.

Eine durch aufeinanderfolgende Betätigung der Aktoren 18 der Aktoreinrichtung 17 voranschreitende Verschlussfront verschiebt das eingesaugte Fluid in dem Transportkanal 19 durch den Kanal 9 hindurch zu dem als Auslass dienenden Anschluss 11. Während Fluid ausgestoßen wird, lässt sich hinter der Verschlussfront bereits neues, zu transportierendes Fluid ansaugen, so dass in einer peristaltischen Pumpbewegung laufend Fluid transportiert werden kann. Typische Flussraten liegen zwischen 0,1 und 10000 µl/min.

Es versteht sich, dass die vorangehend beschriebene Pumpenbaugruppe Fluide ggf. auch in umgekehrter Richtung vom Anschluss 11 zu dem Anschluss 10 befördern kann.

Die Pumpenbaugruppe könnte Bestandteil einer größeren, eine Vielzahl weiterer Funktionen ausübenden Flusszelle sein. Ein- und Auslass könnten zusammenfallen und ein Fluidtransport in einer Kreisbewegung erfolgen. Anstelle der Anschlüsse 10 und 11 ließen sich Reservoire vorsehen.

Fig. 4 zeigt weitere Möglichkeiten zur Bildung eines Transportkanals 19 zwischen Folien 2 und 3 durch einen mit einem Druckfluid beaufschlagbaren Auslenkkanal.

Gemäß Fig. 4a ist eine Anordnung aus zwei Auslenkkanälen 20' und 20" vorgesehen. Schweißnähte sind in Fig. 4a weggelassen.

Fig. 4b zeigt ein Ausführungsbeispiel mit einem symmetrischen Auslenkkanal 20, bei dem nur die Folie 2 über eine Schweißnaht 13 permanent mit dem Substrat 1 verbunden ist. Zur Verbindung der Folien 2,3 untereinander und zur Begrenzung des Transportkanals 19 dient eine Anpressvorrichtung 21, die vorzugsweise Bestandteil eines Betriebsgeräts ist.

Position, Anzahl und Breite des Auslenkkanals bzw. der Auslenkkanäle sowie die Steifigkeit der Folien sind maßgebend für den Querschnitt und das Volumen des Transportkanals 19.

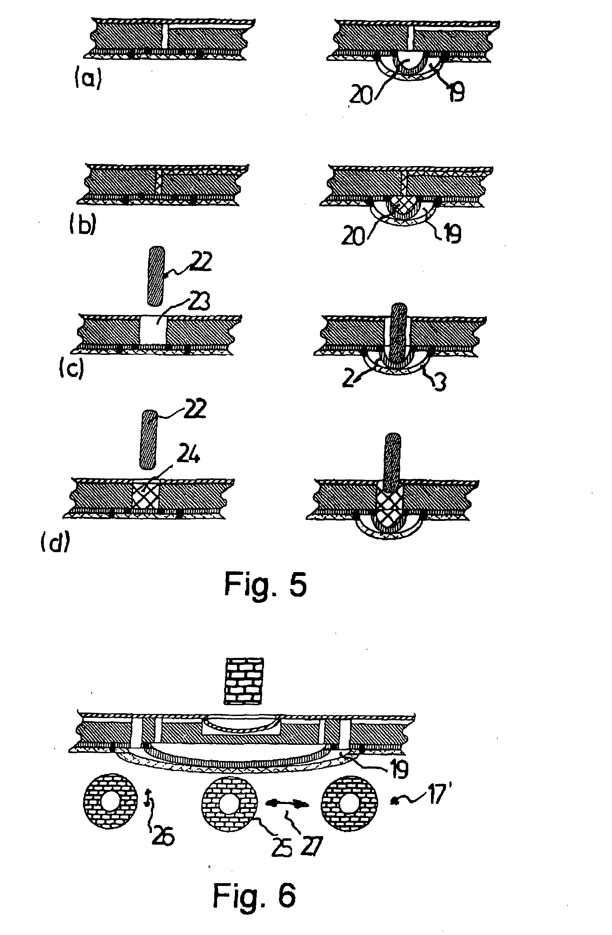

Fig. 5 erläutert unterschiedliche Möglichkeiten zur Folienauslenkung.

Fig. 5a und b verdeutlichen die bereits oben erwähnten Möglichkeiten zur pneumatischen und hydraulischen Druckbeaufschlagung eines Auslenkkanals 20.

Fig. 5c erläutert die Möglichkeit, die Folien 2,3 durch ein mechanisches Element 22 auszulenken, das in eine Durchgangsöffnung 23 in dem Substrat 1 eingreift. Hierbei kann es vorteilhaft sein, wenn das mechanische Element 22 beheizt ist. Durch die Formangleichung zwischen dem Element 22 und der Folie 2 sowie die Formangleichung zwischen der Folie 2 und der Folie 3 lässt sich die Wärme sehr gut auf das sich im Transportkanal befindende Fluid übertragen, was insbesondere für Temperaturwechselzyklen, wie bei der Amplifikation von DNA mittels PCR, vorteilhaft ist, so dass sich die Transportvorrichtung für die Durchführung von PCR und ähnlichen Prozessen in mikrofluidischen Flusszellen eignet. Für die Durchführung von Temperaturwechselzyklen kann entweder die Temperatur eines Elements 22 aktiv variiert werden, oder verschiedene Elemente 22 mit konstanten Temperaturen können nacheinander mit der Folie 3 formschlüssig verbunden werden.

Gemäß Fig. 5d ist in der Durchgangsöffnung eine plastisch oder elastisch verformbare, die Bewegung des mechanischen Elements 22 übertragende aus einem Silikon oder thermoplastischen Elastomer bestehende Füllung 24 vorgesehen.

Die geeignete Steifigkeit der Auslenkfolie und durch die Art und Weise, in der die Auslenkung stattfinden kann, lässt sich die für die Pumpaktoren notwendige Kraft kontrollieren.

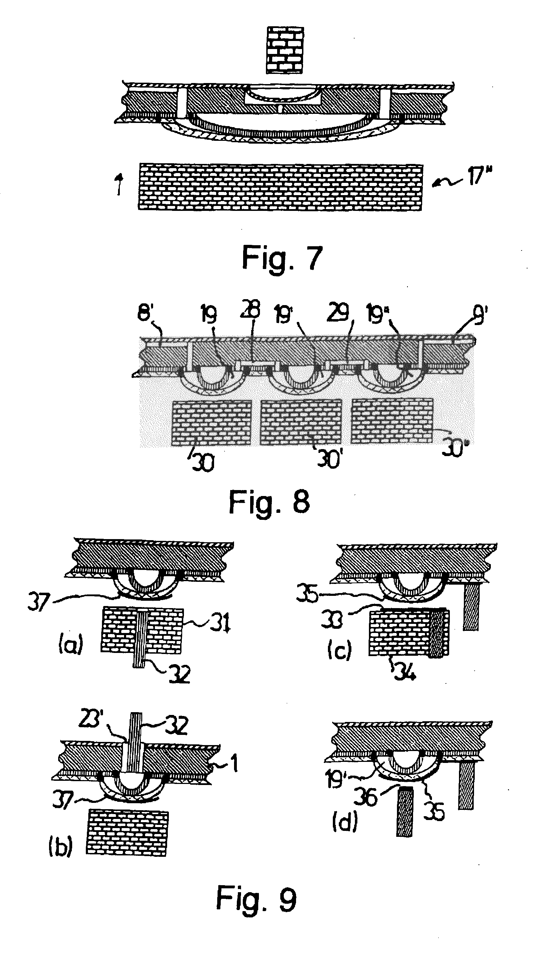

Fig. 6 und 7 zeigen weitere Ausführungsbeispiele für Aktoreinrichtungen.

Eine Aktoreinrichtung 17' gemäß Fig. 6 weist anstelle nur translatorisch bewegbarer Aktoren Rollen 25 auf, die neben einer Translationsbewegung gemäß Pfeil 26 eine Rollbewegung gemäß Pfeil 27 ausführen und durch Verlagerung einer Schließfront in dem Transportkanal 19 ein Fluid transportieren können.

Eine in Fig. 7 dargestellte Aktoreinrichtung 17" verschließt den Transportkanal 19 über seine gesamte Länge. Der Anordnung von Fig. 7 kommt daher die Funktion eines Ventils zu.

Fig. 8 zeigt ein Ausführungsbeispiel einer Pumpenbaugruppe, mit drei aufeinanderfolgenden Kammern bzw. Transportkanälen 19',19" und 19"', die durch Überströmkanäle 28 und 29 miteinander verbunden sind. Jedem der Transportkanäle 19',19",19"' ist ein Aktor 30,30' und 30" zugeordnet. Durch sukzessive Betätigung der Aktoren lässt sich ein Fluid von einem Eingangskanal 8 zu einem Ausgangskanals 9 oder umgekehrt transportieren.

Das Volumen des durch Auslenkung der Folien 2,3 gebildeten Transportkanals 19 kann über das Ausmaß der Auslenkung der Folie 3 durch die Folie 2 hinaus auch vom Eingangsdruck des zu transportierenden Fluids abhängen. Um unterschiedlich große Volumina des Transportkanals beim Fluidtransport berücksichtigen zu können, kommt es darauf an, die jeweilige Größe des Transportkanals zu kennen.

Fig. 9 zeigt verschiedene Möglichkeiten zur Erfassung der Auslenkung, bzw. der Größe des Volumens des Transportkanals. Insbesondere bei Anwendungen, in denen der Eingangsdruck eines zu transportierenden Fluids schwankt, z.B. im Bereich der Medikamentendosierung, kann es erforderlich sein, die Auslenkung der Folien zu kontrollieren, um damit den Durchfluss durch die Pumpe z.B. durch Anpassung der Pumpfrequenz regeln zu können.

Fig. 9a zeigt einen Aktor 31 mit einem Lichtleiter 32. Der Lichtleiter 32 sendet Licht zu einer reflektierenden Fläche 37 auf der Folie 3 im Bereich des Transportkanals 19 aus und empfängt reflektiertes Licht, dessen Intensität von der jeweiligen Ausdehnung der Folie 3 und der Lage 31 des Aktors abhängt. Aus der Lichtmessung in Verbindung mit einer Erfassung der Lage des Aktors lässt sich die Ausdehnung der Folie und damit das Innenvolumen des Transportkanals ermitteln.

Gemäß Fig. 9b ist der lichtaussendende und -empfangende Lichtleiter 32 nicht Bestandteil des Aktors sondern in einer Durchgangsöffnung 23 im Substrat 1 angeordnet.

Gemäß Fig. 9c erfolgt die Messung der Kapazität einer Elektrode 33 auf einem Aktor 34 und eine Elektrode 35 auf der Folie 3 im Bereich des Transportkanals 19. Die gleiche Konfiguration ließe sich verwenden, um die Messung der druckbedingten Auslenkung der Folie 3 mittels Leitfähigkeitsmessung durchzuführen. In diesem Fall ist die Elektrode 35 vorzugsweise als leitfähiger Streifen, z.B. in Form einer streifenförmigen elektrisch leitfähigen, insbesondere metallischen Beschichtung oder Bedruckung parallel zur Längsachse in Transportrichtung des Kanals 19 ausgeführt. Vorzugsweise braucht diese nicht, wie in Fig. 9c gezeigt, separat elektrisch kontaktiert zu werden. Wenigstens zwei der Aktoren 18,34 werden gemäß Fig. 9c mit jeweils einer Elektrode 33 ausgestattet, wobei die Elektroden über eine Auswertschaltung elektrisch verbunden sind. Befindet sich einer der mindestens zwei Aktoren im nicht aktuierten Zustand und der andere im aktuierten Zustand, so wird die Elektrode 35 vom zweiten Aktor berührt, vom ersten jedoch nicht. Entsprechend kann zwischen den beiden Elektroden 33 kein Strom fließen. Beim Aktuieren/Bewegen des zweiten Aktors kommt dieser bei Berührung der Folie 3 mit der sich darauf befindenden Elektrode 35 in Kontakt, und es kann ein Strom zwischen den Elektroden 33 der beiden Aktoren fließen. Die Zeit oder der Weg, den der erste Aktor von seiner Ausgangsposition bis zum Kontakt mit der Folie 3 benötigt, ist daher ein Maß für den druckbedingten Auslenkungsgrad der Folie 3 und kann zur Regelung herangezogen werden. Ebenso könnte eine Konfiguration mehrere Elektroden in einem definierten Abstand entlang der Breite des Transportkanals verwenden, wobei die Anzahl der nach dem oben beschriebenen Prinzip kurzgeschlossenen Elektroden die Aussage über den Grad der druckbedingten Auslenkung der Folie 3 liefert.

Fig. 9d zeigt einen nur für Messzwecke gebildeten, keiner Pumpbeanspruchung unterliegenden Messtransportkanal 19' mit einer Elektrode 35. Die Messung der Auslenkung der Folie 3 erfolgt kapazitiv zwischen der Elektrode 35 und einer weiteren Elektrode 36.

Möglich ist ebenso die Verwendung von Wirbelstromsensoren zu Messung der Auslenkung der Folie 3.

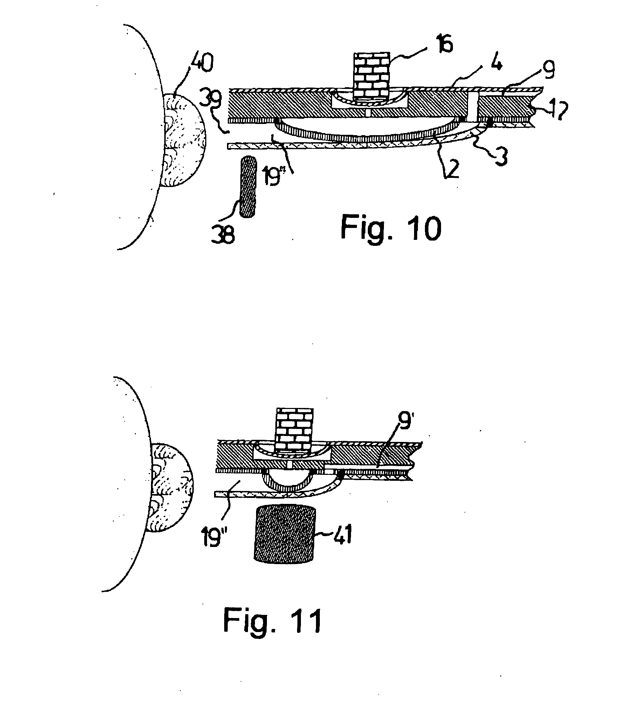

Fig. 10 zeigt eine Baugruppe mit einem Substrat 1 und Folien 2,3 und 4, die sich von der Pumpenbaugruppe gemäß den Fig. 1 bis 4 dadurch unterscheidet, dass ein zu bildender Transportkanal 19" zwischen der Folie 2 und der Folie 3 mangels Verbindung zwischen den Folien an einem Ende offen ist. Am anderen Ende steht der Transportkanal mit einem weiterführenden Kanal 9 in Verbindung.

Der Transportkanal 19" ist zwecks Befüllung durch Kapillarwirkung innenseitig durch Oberflächenmodifikation oder -beschichtung hydrophil konditioniert. z.B. durch nass-chemische Behandlung, Koronabehandlung, Plasmabehandlung oder-polymerisation.

Durch Betätigung eines Aktors 16 wird der Transportkanal 19" gebildet und eine Flüssigkeitsprobe 40, z.B ein sich auf der Haut eines Fingers befindender Blutstropfen, tritt am offenen Ende durch Kapillarwirkung in den Transportkanal 19" ein. Die Eingangsöffnung des weiterführenden Kanals 9 bildet hierbei einen Kapillarstopp. Noch der Befüllung wird der Transportkanal 19" mit Hilfe eines Aktors 38 am offenen Ende geschlossen und der Aktor 16 dann zurückgenommen. Die Folien 2,3 legen sich unter Ausstoß der aufgenommenen Flüssigkeitsprobe in den weiterführenden Kanal 9 dann wieder plan an das Substrat 1 an.

Gemäß Fig. 11 ist auch ein weiterführender Kanal 9' hydrophil konditioniert, so dass die genannte Kapillarstoppwirkung aufgehoben ist und eine Flüssigkeitsprobe durch den Transportkanal 19" hindurch auch in den weiterführenden Kanal 9' eintritt. Ein Aktor 39 schließt den befüllten Kanal 9' ab. Die Vorrichtung gemäß Fig. 11 wirkt so als Ventil.

Die Aktoren 16,38 und 41 können Teil eines Betriebsgerätes oder Teil eines Gehäusebauteils einer Einweg-Flusszelle sein, wobei das Gehäusebauteil ggf. relativ zu der Flusszelle bewegbar oder verschiebbar ist.

## Patentansprüche

1. Mikrofluidische Vorrichtung zum Transport eines Fluids, insbesondere Mikropumpe oder Mikroventil,
**gekennzeichnet durch** Folien (2,3), die mit einander gegenüberliegenden Folienflächen aneinander anliegen und unter Begrenzung eines zwischen den Folien (2,3) zu bildenden Transportkanals (19) miteinander verbunden sind, sowie **durch** Auslenkeinrichtungen zur Bildung des Transportkanals (19) unter gemeinsamer Auslenkung der aneinander anliegenden Folien (2,3) in einer Richtung senkrecht zu den Folienflächen, wobei ein auslenkbarer Flächenbereich (12) der in Auslenkrichtung hinteren Folie (2) innerhalb des auslenkbaren, **durch** die Verbindung (15) zwischen den Folien (2,3) begrenzten Flächenbereichs (14) der in Auslenkrichtung vorderen Folie (3) liegt.

2. Vorrichtung nach Anspruch 1,
**dadurch gekennzeichnet,**
**dass** die Folien (2,3) unter gegenseitiger Anhaftung der aneinander anliegenden Folienflächen miteinander unlösbar, insbesondere durch Verschweißung, oder Verklebung, vorzugsweise durch Laserschweißen, verbunden sind.

3. Vorrichtung nach Anspruch 1 oder 2,
**dadurch gekennzeichnet,**
**dass** wenigstens die in Auslenkrichtung hintere Folie (2) unlösbar mit einem starren Substrat (1) verbünden ist.

4. Vorrichtung nach Anspruch 3,
**dadurch gekennzeichnet,**
**dass** der auslenkbare Flächenbereich (12) der in Auslenkrichtung hinteren Folie (2) durch den Verbindungsbereich dieser Folie (2) mit dem Substrat (1), insbesondere durch eine die Folie (2) mit dem Substrat (1) verbindende Schweißnaht (13), begrenzt ist.

5. Vorrichtung nach einem der Ansprüche 2 bis 4,
**dadurch gekennzeichnet,**
**dass** der auslenkbare Flächenbereich (14) der in Auslenkrichtung vorderen Folie (3) durch einen Verbindungsbereich mit der in Auslenkungsrichtung hinteren Folie (2), insbesondere eine die vordere Folie (3) mit der hinteren Folie (2) verbindende Schweißnaht (15), begrenzt ist.

6. Vorrichtung nach Anspruch 5,
**dadurch gekennzeichnet,**
**dass** die die Folien (2,3) verbindende Schweißnaht (15) ferner eine die hintere Folie (2) mit dem Substrat (1) verbindende Doppelschweißnaht ist.

7. Vorrichtung nach einem der Ansprüche 1 bis 6,
**dadurch gekennzeichnet,**
**dass** zumindest die beiden Folien (2,3) aus dem gleichen Material, vorzugsweise gleichen Kunststoffmaterial, bestehen.

8. Vorrichtung nach einem der Ansprüche 1 bis 7,
**dadurch gekennzeichnet,**
**dass** die Auslenkeinrichtungen zur Ausübung von pneumatischem, hydraulischem oder/und mechanischem Druck auf den auslenkbaren Flächenbereich (12) der in Auslenkrichtung hinteren Folie (2) vorgesehen sind.

9. Vorrichtung nach einem der Ansprüche 1 bis 8,
**dadurch gekennzeichnet,**
**dass** in dem Flächenbereich des Substrats (1), welcher dem auslenkbaren Flächenbereich (12) der in Auslenkungsrichtung hinteren Folie (2) gegenüberliegt, ein Druckkanal (6,7) oder eine Durchgangsöffnung (23) für den Durchtritt eines Aktors (22) ausmündet, wobei der Aktor ggf., z.B. durch Durchführung einer Amplifikationsreaktion, beheizbar ist.

10. Vorrichtung nach einem der Ansprüche 1 bis 9,
**dadurch gekennzeichnet,**
**dass** in den Flächenbereich des Substrats (1), welcher dem Differenzbereich der auslenkbaren Flächenbereiche (12,14) der vorderen und hinteren Folie (2,3) gegenüberliegt, wenigstens ein Kanal (8,9) ausmündet, welcher ggf. wenigstens mit einem im Substrat (1) gebildeten fluidischen Anschluss, Reservoir oder anderen Verarbeitungseinrichtung, wie einem Mischer, einem Filter, einer Messkammer, einer Reaktionskammer oder dergleichen, verbunden ist.

11. Vorrichtung nach einem der Ansprüche 1 bis 10,
**dadurch gekennzeichnet,**
**dass** zur Bildung des Transportkanals (19) die in Auslenkrichtung hintere Folie (2) mehrere auslenkbare Flächenbereiche aufweist.

12. Vorrichtung nach einem der Ansprüche 2 bis 11,
**dadurch gekennzeichnet,**
**dass** der den Transportkanal (19) begrenzende Haftverbindungsbereich (15) zwischen den Folien (2,3) rundum geschlossen ist, oder eine Öffnung (39) aufweist.

13. Vorrichtung nach Anspruch 12,
**dadurch gekennzeichnet,**
**dass** der Transportkanal (19) innenseitig hydrophil konditioniert ist.

14. Vorrichtung nach einem der Ansprüche 1 bis 13,
**dadurch gekennzeichnet,**
**dass** Einrichtungen zur Bestimmung des Auslenkungsgrades der vorderen Folie (3) bzw. des Innenvolumens des Transportkanals (19) vorgesehen sind.

15. Vorrichtung nach einem der Ansprüche 1 bis 14,
**dadurch gekennzeichnet,**
**dass** eine auf den Transportkanal (19) einwirkende Aktoreinrichtung (17) zum teilweisen oder vollständigen Verschluss des Transportkanals (9), insbesondere zur Erzeugung einer in Transportrichtung eines Fluids fortschreitenden Schließfront vorgesehen ist.

## Claims

1. Microfluidic device for transporting a fluid, in particular a micropump or microvalve, **characterized by** films (2, 3) which bear with mutually opposite film surfaces one against the other and which are connected to one another with delimitation of a transport duct (19) to be formed between the films (2, 3), and by deflection arrangements for forming the transport duct (19) by the joint deflection, in a direction perpendicular to the film surfaces, of the films (2, 3) bearing one against the other, a deflectable surface region (12) of the film (2) at the rear in the deflection direction lying inside the deflectable surface region (14), delimited by the connection (15) between the films (2, 3), of the film (3) at the front in the deflection direction.

2. Device according to Claim 1, **characterized in that** the films (2, 3) are connected to one another unreleasably, in particular by welding or adhesive bonding, preferably by laser welding, with the mutual adhesion of the film surfaces bearing one against the other.

3. Device according to Claim 1 or 2, **characterized in that** at least the film (2) at the rear in the deflection direction is connected unreleasably to a rigid substrate (1).

4. Device according to Claim 3, **characterized in that** the deflectable surface region (12) of the film (2) at the rear in the deflection direction is delimited by the region of connection of this film (2) to the substrate (1), in particular by a weld seam (13) connecting the film (2) to the substrate (1).

5. Device according to one of Claims 2 to 4, **characterized in that** the deflectable surface region (14) of the film (3) at the front in the deflection direction is delimited by a region of connection to the film (2) at the rear in the deflection direction, in particular by a weld seam (15) connecting the front film (3) to the rear film (2).

6. Device according to Claim 5, **characterized in that**, furthermore, the weld seam (15) connecting the films (2, 3) is a double weld seam connecting the rear film (2) to the substrate (1).

7. Device according to one of Claims 1 to 6, **characterized in that** at least the two films (2, 3) consist of the same material, preferably of the same plastic material.

8. Device according to one of Claims 1 to 7, **characterized in that** the deflecting devices are provided for exerting pneumatic, hydraulic and/or mechanical pressure upon the deflectable surface region (12) of the film (2) at the rear in the deflection direction.

9. Device according to one of Claims 1 to 8, **characterized in that** a pressure duct (6, 7) or a through-orifice (23) for the passage of an actuator (22) issues **in that** surface region of the substrate (1) which lies opposite the deflectable surface region (12) of the film (2) at the rear in the deflection direction, the actuator, if appropriate, being heatable, for example, as a result of the execution of an amplification reaction.

10. Device according to one of Claims 1 to 9, **characterized in that** at least one duct (8, 9) issues into that surface region of the substrate (1) which lies opposite the differential region of the deflectable surface regions (12, 14) of the front and the rear film (2, 3), which duct, if appropriate, is connected at least to a fluidic connection, reservoir or other processing arrangement, such as a mixer, a filter, a measuring chamber, a reaction chamber or the like, which is formed in the substrate (1).

11. Device according to one of Claims 1 to 10, **characterized in that**, to form the transport duct (19), the film (2) at the rear in the deflection direction has a plurality of deflectable surface regions.

12. Device according to one of Claims 2 to 11, **characterized in that** the adhesive connection region (15) delimiting the transport duct (19) is closed all-round between the films (2, 3) or has an orifice (39).

13. Device according to Claim 12, **characterized in that** the transport duct (19) is conditioned hydrophilically on the inside.

14. Device according to one of Claims 1 to 13, **characterized in that** arrangements for determining the degree of deflection of the front film (3) or of the inner volume of the transport duct (19) are provided.

15. Device according to one of Claims 1 to 14, **characterized in that** an actuator arrangement (17), acting upon the transport duct (19), is provided for the partial or complete closure of the transport duct (9), in particular for generating a closing front advancing in the direction of transport of a fluid.

## Revendications

1. Dispositif microfluidique pour le transport d'un fluide, en particulier micropompe ou microvalve, **caractérisé par** des feuilles (2,3), qui se placent l'une contre l'autre avec des faces de feuille opposées l'une à l'autre et qui sont liées l'une à l'autre en délimitant un canal de transport (19) à former entre les feuilles (2,3), ainsi que par des dispositifs de déviation pour former le canal de transport (19) avec une déviation commune des feuilles (2,3) placées l'une contre l'autre dans une direction perpendiculaire aux faces des feuilles, une zone de surface (12) pouvant être déviée de la feuille arrière (2) dans le sens de la déviation se situant au sein de la zone de surface (14) pouvant être déviée, délimitée par la liaison (15) entre les feuilles (2,3), de la feuille avant (3) dans le sens de la déviation.

2. Dispositif selon la revendication 1, **caractérisé en ce que** les feuilles (2,3) sont liées l'une à l'autre de manière indissociable par une adhérence mutuelle des faces de feuilles placées l'une contre l'autre, en particulier par soudure ou collage, de préférence par soudure au laser.

3. Dispositif selon la revendication 1 ou 2, **caractérisé en ce qu'**au moins la feuille arrière (2) dans le sens de déviation est liée de manière indissociable à un substrat (1) rigide.

4. Dispositif selon la revendication 3, **caractérisé en ce que** la zone de surface (12) pouvant être déviée de la feuille arrière (2) dans le sens de déviation est délimitée par la zone de liaison de cette feuille (2) au substrat (1), en particulier par un joint de soudure (13) liant la feuille (2) au substrat (1).

5. Dispositif selon l'une quelconque des revendications 2 à 4, **caractérisé en ce que** la zone de surface (14) pouvant être déviée de la feuille avant (3) dans le sens de déviation est délimitée par une zone de liaison à la feuille arrière (2) dans le sens de déviation, en particulier par un joint de soudure (15) liant la feuille avant (3) à la feuille arrière (2).

6. Dispositif selon la revendication 5, **caractérisé en ce que** le joint de soudure (15) liant les feuilles (2,3) est en outre un double joint de soudure liant la feuille arrière (2) au substrat (1).

7. Dispositif selon l'une quelconque des revendications 1 à 6, **caractérisé en ce qu'**au moins les deux feuilles (2,3) sont constituées par le même matériau, de préférence par le même matériau synthétique.

8. Dispositif selon l'une quelconque des revendications 1 ou 7, **caractérisé en ce qu'**on a prévu les dispositifs de déviation pour exercer une pression pneumatique, hydraulique et/ou mécanique sur la zone de surface (12) pouvant être déviée de la feuille arrière (2) dans le sens de déviation.

9. Dispositif selon l'une quelconque des revendications 1 à 8, **caractérisé en ce qu'**un canal de pression (6,7) ou une ouverture de passage (23) pour le passage d'un actionneur (22) débouche dans la zone de surface du substrat (1), qui est opposée à la zone de surface (12) pouvant être déviée de la feuille arrière (2) dans le sens de déviation, l'actionneur pouvant le cas échéant être chauffé, par exemple par la réalisation d'une réaction d'amplification.

10. Dispositif selon l'une quelconque des revendications 1 ou 9, **caractérisé en ce qu'**au moins un canal (8, 9) débouche dans la zone de surface du substrat (1), qui est opposée à la zone de différence des zones de surface (12, 14) pouvant être déviées de la feuille avant et de la feuille arrière (2, 3), qui est relié le cas échéant à au moins un raccord fluidique, réservoir fluidique ou autre dispositif de transformation fluidique, tel qu'un mélangeur, un filtre, une chambre de mesure, une chambre de réaction ou analogue, formé dans le substrat (1).

11. Dispositif selon l'une quelconque des revendications 1 à 10, **caractérisé en ce que** la feuille arrière (2) dans le sens de déviation présente plusieurs zones de surface pouvant être déviées pour la formation du canal de transport (19).

12. Dispositif selon l'une quelconque des revendications 2 à 11, **caractérisé en ce que** la zone de liaison par adhérence (15) délimitant le canal de transport (19) entre les feuilles (2, 3) est fermée en périphérie ou présente une ouverture (39).

13. Dispositif selon la revendication 12, **caractérisé en ce que** le canal de transport (19) est conditionné de manière hydrophile sur la face interne.

14. Dispositif selon l'une quelconque des revendications 1 à 13, **caractérisé en ce qu'**on a prévu des dispositifs pour la détermination du degré de déviation de la feuille avant (3) ou du volume interne du canal de transport (19).

15. Dispositif selon l'une quelconque des revendications 1 à 14, **caractérisé en ce qu'**on a prévu un dispositif d'actionneur (17) agissant sur le canal de transport (19) pour la fermeture partielle ou complète du canal de transport (9), en particulier pour la réalisation d'un front de fermeture évoluant dans le sens de transport d'un fluide.
